# EUROPÄISCHE PATENTSCHRIFT

(11) **EP 0 856 495 B1**
(45) Veröffentlichungstag und Bekanntmachung des Hinweises auf die Patenterteilung: **21.03.2001**
(21) Anmeldenummer: 98101685.0
(22) Anmeldetag: 31.01.1998
(51) Int. Cl.: C04B 28/14, C04B 22/14

(54) **Putzmörtel enthaltend Zuschläge und Bindemittel**
Stucco mortar and binder containing additives
Mortier d'enduit et liant contenant des additifs

(30) Priorität: 04.02.1997 DE 19704040
(43) Veröffentlichungstag der Anmeldung: 05.08.1998
(73) Patentinhaber: Gebr. Knauf Westdeutsche Gipswerke KG, D-97343 Iphofen (DE)
(72) Erfinder: Hartmann, Peter, Dr., 97350 Mainbernheim (DE); Hummel, Hans-Ulrich, Prof. Dr., 97348 Markt Einersheim (DE)
(74) Vertreter: Werner, Hans-Karsten, Dr.Dipl.-Chem.

(56) Entgegenhaltungen:
- DE-A- 2 522 537
- FORG G: "Einfluss von verschiedenen Verzoegerern auf die Kristallisation und die Festigkeiten von Stuckgips" ZEM KALK GIPS ED B;ZEMENT-KALK-GIPS, EDITION B MAY 1989, Bd. 42, Nr. 5, Mai 1989, Seiten 229-232, XP002064106
- CHEMICAL ABSTRACTS, vol. 80, no. 26, 1.Juli 1974 Columbus, Ohio, US; abstract no. 148652m, XP000152137 & JP 48 102 828 A (MITSUBISHI CHEMICAL INDUSTRIES CO.,LTD) 24.Dezember 1973
- CHEMICAL ABSTRACTS, vol. 84, no. 18, 3.Mai 1976 Columbus, Ohio, US; abstract no. 126070a, XP000152115 & JP 50 156 536 A (TAISEI CONSTRUCTION CO.,LTD) 17.Dezember 1975
- DIN 18 550 Teil 2, Seite 3; Beuth-Verlag, Berlin und Köln (DE)
- DIN 1168, Blatt 1; Teil 2, Mai 1975, Beuth-Verlag, Berlin und Köln (DE)

## Beschreibung

Gegenstand der vorliegenden Erfindung ist ein Putzmörtel enthaltend Zuschläge und Bindemittel auf Basis von Stuckgips oder Gemischen von Stuckgips mit Estrichgips im Verhältnis 1:0 bis 1:1 sowie gegebenenfalls Leichtzuschlägen und/oder einen Verzögerer.

Als Zuschläge sind bisher für Putzmörtel inerte Materialien verwendet worden, insbesondere Kalkstein oder relativ grob vermahlener Anhydrit.

DE-A25 22 537 offenbart die Herstellung großstückiger Gipskörper mit eingesetzten Verstärkungs- bzw. Bewehrungselementen. Hierzu werden geeignete Gipsmaterialien, z.B.Gipshalbhydrat, mit Ettringit und Härtungsverzögeren, wie Kaliumcitrat, sowie Zuschlagstoffen und Wasser vermischt und zu Produkten geformt. Der Ettringitanteil beträgt 10-100 Gew.%, insbesondere 30-70 Gew.%, bezogen auf das Gipshalbhydrat.

Die Erfindung hat sich die Aufgabe gestellt, einen Putzmörtel zur Verfügung zu stellen, welcher eine höhere Feuerresistenz aufweist, jedoch bezüglich der sonstigen Eigenschaften möglichst weitgehend den bekannten Putzmörteln entspricht.

Es wurde jetzt gefunden, daß diese Aufgabe dadurch gelöst werden kann, daß das Gemisch als Zuschlag Ettringit enthält im Verhältnis Gew.-% Gips zu Gew.-% Ettringit wie 75:25 bis 40:60.

Ettringit ist ein Calcium-Aluminium-Sulfathydrat der allgemeinen Formel 3CaO·Al₂O₃·3 CaSO₄·32H₂O. Ettringit ist eine Substanz, die im Zement und in Zementputzen in geringen Mengen stets auftritt und dort für die häufig benötigte Frühfestigkeit verantwortlich ist.

Überraschenderweise ist ein vorgefertigter Ettringit, welcher eingebunden ist in abgebundenem Stuckgips oder Gemische von Stuckgips mit Estrichgips stabil und hat keine negativen Einflüsse auf die Rheologie des Frischmörtels.

Der erfindungsgemäß Putzmörtel zersetzt sich erst durch Entwässerung in dem Temperaturbereich zwischen 90 und 250°C. Dies führt zu einer deutlich erhöhten Feuerresistenz. Die Schwerlöslichkeit des Ettringits führt dazu, daß auch bei Bewitterungen keine Eluierungen von Schwermetallen, insbesondere von Aluminium, erfolgen.

Die erfindungsgemäßen Verhältnisse der Gewichtsprozente Gips zu Gewichtsprozente Ettringit ergeben sich aus der Tatsache, daß weniger Ettringit als 25 Gew.-% zu keiner ausreichenden Erhöhung der Feuerresistenz führt. Die Obergrenze von 60 Gew.-% Ettringit ergibt sich daraus, daß bei höheren Gehalten die mechanische Stabilität des fertigen Putzes leidet.

## Patentansprüche

1. Putzmörtel enthaltend Zuschläge und Bindemittel auf Basis von Stuckgips oder Gemischen von Stuckgips mit Estrichgips im Verhältnis 1:0 bis 1:1 sowie gegebenenfalls Leichtzuschlägen und/oder einen Verzögerer, dadurch gekennzeichnet, daß das Gemisch als Zuschlag Ettringit enthält im Verhältnis Gew.-% Gips zu Gew.-% Ettringit wie 75:25 bis 40:60.

2. Putzmörtel gemäß Anspruch 1, dadurch gekennzeichnet, daß als Leichtzuschläge geblähte Perlite oder Vermiculite enthalten sind.

3. Putzmörtel gemäß Anspruch 1 oder 2, dadurch gekennzeichnet, daß als Verzögerer Fruchtsäuren enthalten sind.

4. Putzmörtel gemäß einem der Ansprüche 1 bis 3, dadurch gekennzeichnet, daß als Verzögerer Weinsäure mit einem Gehalt bis zu 2 Gew.-% Calciumhydroxid enthalten ist.

## Claims

1. A plastering composition containing aggregates and binders based on plaster of Paris or mixtures of plaster of Paris and hard-finish plaster in a ratio of from 1:0 to 1:1 and optionally light-weight aggregates and/or a retardant, characterized in that said composition contains ettringite as an aggregate in a ratio of plaster to ettringite of from 75:25 to 40:60 (w/w).

2. The plastering composition according to claim 1, characterized by containing expanded perlites or vermiculites as said light-weight aggregates.

3. The plastering composition according to claim 1 or 2, characterized by containing fruit acids as said retardant.

4. The plastering composition according to any of claims 1 to 3, characterized by containing tartaric acid having a content of up to 2% by weight of calcium hydroxide as said retardant.

## Revendications

1. Mortier pour enduit, contenant des granulats et un liant, à base de plâtre de moulage ou de mélanges de plâtre de moulage et de plâtre pour chapes selon un rapport de 1:0 1:1, et éventuellement des granulats légers et/ou un retardateur, caractérisé en ce que le mélange contient en tant que granulat de l'ettringite selon un rapport du plâtre à l'ettringite en % en poids, de 75:25 à 40:60.

2. Mortier pour enduit selon la revendication 1, caractérisé en ce qu'il contient en tant que granulats légers des perlites ou vermiculites expansées.

3. Mortier pour enduit selon la revendication 1 ou 2, caractérisé en ce qu'il contient, en tant que retardateur, des acides dérivés de fruits.

4. Mortier pour enduit selon l'une des revendications 1 à 3, caractérisé en ce qu'il contient, en tant que retardateur, de l'acide tartrique contenant jusqu'à 2 % en poids d'hydroxyde de calcium.
